# EUROPEAN PATENT SPECIFICATION

(11) **EP 0 734 514 B1**
(45) Date of publication and mention of the grant of the patent: **11.11.1998**
(21) Application number: 95904398.5
(22) Date of filing: 20.12.1994
(51) Int. Cl.: G01N 1/28, G01N 1/34

(54) **TISSUE SAMPLE PROCESSING**
BEARBEITUNG EINER GEWEBEPROBE
TRAITEMENT D'UN SPECIMEN DE TISSU

(30) Priority: 21.12.1993 DK 142193
(43) Date of publication of application: 02.10.1996
(73) Proprietor: ESTI CHEM A/S, DK-4600 Koge (DK)
(72) Inventor: MATHIESEN, Thomas, DK-2650 Hvidovre (DK); JENSEN, Jan, Winther, DK-2620 Albertslund (DK); NIELSEN, Peter, Ravn, DK-2300 Kobenhavn S (DK)
(74) Representative: Plougmann, Vingtoft & Partners A/S
(86) International application number: DK9400477
(87) International publication number: WO9517657

(56) References cited:
- EP-A- 10 750
- DE-A- 3 400 195

## Description

### FIELD OF THE INVENTION

The present invention relates to the use of certain ester compounds in the processing of tissue samples that are to be subjected to histological examination.

### BACKGROUND OF THE INVENTION

When preparing human or animal tissues for histological studies, e.g. examination for the presence of malignant cells, it is necessary to pass the tissue sample through a number of steps comprising fixation, typically using a fixing agent such as formaldehyde; dewatering, typically using various mixtures of water and a lower alkanol such as ethanol; clarification; paraffin casting of the clarified tissue sample; the cutting of thin sections from the paraffin cast; deparaffination of the thin section; and staining of the section.

The purpose of the clarification step is to provide a transition (in terms of hydrophillic/lipophilic properties) between on the one hand the dehydrating agent (which must typically be miscible with water) and on the other hand the paraffin. Likewise, the purpose of the deparaffination step is to remove the paraffin from the thin section on a microscope glass slide to prepare the sample for staining by means of agents dissolved in alcoholic or aqueous media.

Traditionally, the clarification and deparaffination steps have involved the use of aromatic solvents such as toluene and, in particular, xylene (typically in the form of technical quality xylene consisting of a mixture of o-, m- and p-xylene). However, in spite of the development of automatic tissue preparation machines, the high toxicity of xylene has lead to a need to replace xylene with a less toxic chemical.

Thus, a number of attempts at realizing such a replacement have been made, examples of potential replacement products being hydrocarbons such as odourless kerosene or n-paraffins, terpenes such as d-limonene, lactate compounds and other organic solvents. Thus, d-limonene which is an unsaturated terpene hydrocarbon solvent extracted from citrus fruits has been applied for some years as a replacement for xylene in histological tissue preparation. However, although the product works technically well, the strong citrus odour together with inherent skin irritation problems has severely limited the practical use of this compound.

Xylene replacement products which are to be acceptable from a functional and work environmental point of view must fulfil a number of criteria such as low toxicity, low vapour pressure, weak odour, good thermal stability up to 70°C, low coloration, inert to human and animal tissue, no influence on tissue staining, and good long-term stability at ambient temperature. Also, the replacement products should be environmentally acceptable in that they should be non-toxic to fish and bacteria and also be readily biodegradable.

An attempt has also been made at using an ester between a branched alkanol and an alkanoic acid, namely 2-ethyl-hexyl dodecanoate. However, this compound has proved functionally unsatisfactory in that samples of high-fat tissue gives rise to problems because it becomes difficult to cut thin sections from the paraffin castings due to the tissue becoming fragile and crumbly.

It has now surprisingly been found that by using certain esters of certain straight-chain fatty acids and certain straight-chain alcohols, the above-described disadvantages in xylene and known xylene replacement products can be eliminated or substantially reduced.

### SUMMARY OF THE INVENTION

Consequently, the present invention concerns the use of a compound of the general formula I

R₁ - C(O) - O - R₂

wherein
R₁ is a straight chain C₃₋₂₃ alkyl group, a straight chain C₃₋₂₃ alkenyl group, a straight chain C₅₋₂₃ alkadienyl group, or a straight chain C₇₋₂₃ alkatrienyl group, where the alkyl, alkenyl, alkadienyl and alkatrienyl group may optionally be substituted with 1 or 2 OH groups;
R₂ is a straight chain C₁₋₁₀ alkyl group which may optionally be substituted with 1 or 2 OH groups;
with the proviso that the total number p of carbon atoms in R₁ and R₂ is in the range of 12 ≤ p ≤ 26;
or a mixture of such compounds in the clarification and/or deparaffination procedures in the processing of histological tissue samples.

Also, the invention concerns a method for preparing histological tissue samples comprising a clarification step and/or a deparaffination step and in which steps compositions containing the compound of formula I defined above are employed.

Without being bound to any specific theory, it is contemplated that the straight-chain nature of compounds of formula I plays an important role in the function during in particular the clarification phase in that the straight-chain compounds may have a better mobility and therefore be better able to be removed from certain types of tissue than any branched compounds.

### DETAILED DESCRIPTION OF THE INVENTION

With respect to the group R₁, it is preferred that a straight-chain alkyl group has 7-17, in particular 9-13 carbon atoms, that a straight-chain alkenyl group has 7-17, in particular 9-10 carbon atoms, and that a straight-chain alkadienyl has 7-18 carbon atoms.

In a particularly preferred embodiment of the invention both R₁ and R₂ are straight-chain alkyl groups.

Specific examples of groups R₁ are n-propyl, n-butyl, n-pentyl, n-hexyl, n-heptyl, n-octyl, n-nonyl, n-decyl, n-undecyl, n-dodecyl, n-tridecyl, n-tetradecyl, n-pentadecyl, n-hexadecyl, n-heptadecyl, n-octadecyl, n-nonadecyl, and docecyl, as well as 8-heptadecenyl, 8,11-heptadecedienyl, 8,11,14-heptadecetrienyl and 11-hydroxy-8-heptadecenyl. Thus, for these groups R₁, the corresponding acyl group R₁-CO- may be an acyl group derived from butyric acid, valeric acid, hexanoic acid, heptanoic acid, caprylic acid, pelargonic acid, capric acid, undecanoic acid, lauric acid, tridecanoic acid, myristic acid, palmitic acid, stearic acid, oleic acid, linoleic acid, linolenic acid and ricinoleic acid.

Examples of the straight-chain C₁₋₁₀ alkyl group for R₂ are methyl, ethyl, n-propyl, n-butyl, n-pentyl, n-hexyl, n-heptyl, n-octyl, n-nonyl, n-decyl. Examples of such groups substituted with 1 or 2 OH groups are 2-hydroxyethyl, 2-hydroxypropyl, 4-hydroxybutyl, 6-hydroxyhexyl. It is preferred that R₂ is C₁₋₆ alkyl such as methyl, ethyl, n-propyl, n-butyl, n-pentyl or n-hexyl which means that the preferred alcohols from which the esters of formula I are formed are C₁₋₆ straight-chain monoalkanols. It is particularly preferred that R₂ is C₁₋₄alkyl.

A preferred class of esters of formula I are those in which the total number p of carbon atoms in R₁ and R₂ is in the range 12≤p≤18.

Examples of esters of the formula I are n-butyl octanoate, n-butyl decanoate, n-butyl dodecanoate, ethyl dodecanoate, methyl dodecanoate, methyl oleate, methyl linolate, methyl linolenate. Preferred examples that are particularly suitable are n-butyl octanoate, n-butyl decanoate, and n-butyl dodecanoate since these esters combine good solvent properties with good penetration properties, good temperature stability, good stability to hydrolysis, low toxicity, high flashpoint and low odour.

The esters of formula I are either known compounds or may be prepared analogously with known compounds. Thus, a typical process for the preparation of the esters is to react the relevant carboxylic acid with the relevant alcohol in equimolar amounts or with a slight excess of the alcohol in the presence of a catalyst, typically an strong acid catalyst such as sulphuric acid, or, preferably, methanesulphonic acid. The process typically takes place under heating in a reaction vessel which is equipped with means for removing the water formed during the reaction, e.g. a Dean-Stark device or a special separation device depending on whether the alcohol is sufficiently volatile and whether the alcohol is miscible with water or not.

The invention further concerns a method for preparing histological tissue samples, said method comprising one or both of the following steps:
1) a clarification step in which a fixed and partially or fully dehydrated tissue sample is clarified through submersion into a composition A comprising 1-100 % w/w of at least one compound of the formula I defined in claim 1; and
2) a deparaffination step in which a thin section from a tissue sample cast in paraffin is deparaffinated through submersion into a composition B comprising 1-100 % w/w of at least one compound of the formula I defined in claim 1.

As it will be apparent, the compositions used in the clarification and deparaffination steps in the method for preparing histological tissue samples may be pure compounds of the general formula I or mixtures of such compounds or the compositions may be mixtures containing at least one of the compounds of the general formula I in combination with one or more diluents. Thus, it is important that a fluid for clarifying an deparaffination has a low viscosity such as at the most 6 cP (6 x 10⁻³ kg m⁻¹ s⁻¹) at the typical operating temperature of 60°C in order to reduce the so-called carry-over whereby the content of one bath will be brought over into the next and thereby polluting it. The present invention fulfils this need in that the esters of formula I have low viscosities which makes them suitable for the clarification and deparaffination processes in histological tissue preparation.

Consequently, it may be desirable to blend the esters of formula I with a diluent in order to decrease the viscosity of the blend to a value lower than the viscosity of the ester of formula I.

Such diluents may be:
1) Saturated hydro-carbon solvents such as odourless kerosene, n-paraffins (saturated n-alkanes), isoparaffins or naphthenes having a flash-point in the range 20-200 °C measured according to ASTM D92;
2) vegetable oils such as coconut oil, palm kernel oil, soy bean oil, rapeseed oil and the like, or processed vegetable oils such as vegetable oils subjected to hydrogenation, refining, bleaching, epoxydation or other conventional oleochemical processes;
3) esters based on C₁₋₂₄ monocarboxylic acids esterified with C₁₋₁₈ mono- or dialcohols not comprised by the general formula I, e.g. 2-ethylhexyl acetate, 2-ethylhexyl 2-ethylhexanoate, 2-ethylhexyl laurate, isobutyl laurate, 2-ethylhexyl oleate and the like;
4) esters based on C₂₋₁₀ dicarboxylic acids and C₁₋₁₈ alcohols, e.g. dimethyl oxalate, dimethyl succinate, dimethyl glutarate, dimethyl adipate; dibutyl phthalate and the like;
5) esters based on mono-, di- or tricarboxylic acids containing one or more hydroxy groups and on C₁₋₁₈ alcohols, e.g. trimethyl citrate, trimethyl acetyl citrate, ethyl lactate and the like;
6) terpenes derived from citrus fruits such as lemons, oranges and limes, an example of such a terpene being d-limonene.

The compositions used according to the invention may contain 1-99 % w/w of the compounds of the general formula I and 99-1 % w/w of the diluents mentioned above, preferably 30-70 % w/w and 70-30 % w/w, respectively, in particular 40-60 % w/w and 60-40 % w/w, respectively.

Other additives that may be be present in the compositions used according to the invention are non-ionic surfactants in an amount of 0.01-10 % w/w, preferably 0.1-5 % w/w, in particular 0.1-0.5 % w/w, e.g. ethoxylated fatty alcohols, ethoxylated castor oil or ethoxylated fatty acids; and C₁₋₁₀ aliphatic alcohols in an amount of 0.01-10 % w/w, preferably 0.1-8 % w/w, in particular 0.1-5 % w/w, e.g. ethanol or propanol.

Generally speaking, compounds of the general formula I or compositions containing such compounds and a diluent may be used as direct replacements for xylene in standardized tissue preparation procedures. Thus, the compounds or the compositions may be used directly in existing tissue processing apparatuses such as the VIP Tissue Processor (Miles, USA), Shandon Elliot Tissue Processor, amd the Autoteknikon Tissue Processor. In a typical process, a tissue sample is first subjected to immersion in a fixing agent such as a 3-4 % aqueous formaldehyde solution followed by immersion in aqueous ethanol solutions of increasing ethanol concentrations going from 70% to 99 %, after which the sample is immersed in the compound of formula I or the composition containing the compound, usually in several successive but separate baths, in turn followed by immersion in several successive (to ensure removal of the clarifying agent) baths of molten paraffin wax. Usually, the immersions not involving molten paraffin wax are carried out at 40°C whereas the paraffin treatments are usually carried out at 60°C.

In a typical deparaffination procedure, the thin section of the paraffin wax cast is placed on a microscope slide and then placed in a heating chamber at 60°C followed by immersion first into two successive baths of a deparaffinating medium and subsequently into 8 or more baths of ethanol of decreasing concentration at room temperature, typically 4 baths of 99 % ethanol, 2 baths of 96 % aqueous ethanol and one bath of 70 % aqueous ethanol, and finally followed by immersion into water in preparation for staining with conventional staining agents.

When using an ester of the formula I or a composition containing such an ester as the deparaffinating medium, this treatment may be carried out as one treatment at 37°C for 20 minutes followed by a period of 4 minutes at 37°C during which excess deparaffinating medium is allowed to drip off.

The invention is further illustrated by the following preparations, examples and comparative examples.

### PREPARATION 1

### Preparation of n-butyl decanoate

A 1 litre 3-necked flask equipped with a mechanical stirrer, a thermometer, a Dean-Stark water separating device and an inlet for nitrogen was charged with 185 g (2.5 moles) n-butanol, 431 g (2.5 moles) capric acid (n-decanoic acid) of 99% purity, and 3 g methanesulphonic acid. The Dean-Stark device was filled with n-butanol and excess n-butanol (18 g) was charged into the flask. The temperature was raised gradually to a final reaction temperature of 190°C. After the acid value had fallen to below 0.5 mg KOH/g (tested according to ASTM D974), excess of n-butanol was distilled off in vacuum.

The final product was a thin (viscosity 2 cP at 25 °C), light yellow oil at 20°C with an acid value of approx. 0.5 mg KOH/g.

### EXAMPLE 1

This example illustrates the use of n-butyl decanoate for clarifying and deparaffinating tissue samples.

n-Butyl decanoate min. 99% purity was applied in a standard Autoteknikon Tissue Processor in the following processing programme for clarification and casting (corresponding to the standard processing programme for the apparatus):

| Programme step no. | Time (min.) | Temp (°C) | Medium |
|---|---|---|---|
| 1 | 60 | 40 | 3.6% formalin |
| 2 | 60 | 40 | 70% ethanol |
| 3 | 60 | 40 | 96% ethanol |
| 4 | 60 | 40 | 96% ethanol |
| 5 | 60 | 40 | 99% ethanol |
| 6 | 60 | 40 | 99% ethanol |
| 7 | 60 | 40 | 99% ethanol |
| 8 | 90 | 40 | n-butyl decanoate |
| 9 | 90 | 40 | n-butyl decanoate |
| 10 | 120 | 60 | paraffin |
| 11 | 120 | 60 | paraffin |

Following casting into paraffin, sections of standard thickness were cut on a microtome and were subsequently put through the following deparaffination procedure:

| Programme step no. | Time (min.) | Temp (°C) | Medium |
|---|---|---|---|
| 1 | 20 | 60 | none (melting |
| | | | max) |
| 2 | 20 | 37 | n-butyl decanoate |
| 3 | 4 | 37 | none (drip-off) |
| 4 | 3 | room | 99% ethanol |
| 5 | 3 | room | 99% ethanol |
| 6 | 3 | room | 99% ethanol |
| 7 | 3 | room | 99% ethanol |
| 8 | 3 | room | 96% ethanol |
| 9 | 3 | room | 96% ethanol |
| 10 | 3 | room | 96% ethanol |
| 11 | 3 | room | 70% ethanol |
| 12 | 3 | room | water |

Subsequent to step 10, 11, or 12 in the above deparaffination procedure, the sections were mounted onto a microscope slide by means of a standard mounting agent (Such as polymethacrylate solution in toluene). Subsequent to step 12, the section was subjected to staining with one of a range of standard staining agents.

A range of different tissue qualities were tested: fatty tissue, non-fatty tissue and blood-rich tissue.

Results: the final tissue preparations were fully comparable with the results obtained when using xylene on the same tissue samples for clarification and deparaffination.

### COMPARATIVE EXAMPLE 1

A mixture of 60 parts by weight isobutyl octanoate and 40 parts by weight of isobutyl decanoate was tested in a Sheldon Elliot Tissue Processor using the same procedure as described in Example 1. The results showed problems with fatty tissues where the residual concentration of isobutyl octanoate and isobutyl decanoate was too high and caused problems in connection with the cutting of thin sections and in connection with staining.

### COMPARATIVE EXAMPLE 2

2-ethylhexyl dodecanoate min 99% purity by weight was applied in a Sheldon Elliot Tissue Processor using the same procedure as described in Example 1. The results showed problems with fatty tissues where the residual concentration of 2-ethylhexyl dodecanoate was too high and caused problems in connection with the cutting of thin sections and in connection with staining.

## Claims

1. Use of a compound of the general formula I
R₁ - C(O) - O - R₂
wherein
R₁ is a straight chain C₃₋₂₃ alkyl group, a straight chain C₃₋₂₃ alkenyl group, a straight chain C₅₋₂₃ alkadienyl group, or a straight chain C₇₋₂₃ alkatrienyl group, where the alkyl, alkenyl, alkadienyl and alkatrienyl group may optionally be substituted with 1 or 2 OH groups;
R₂ is a straight chain C₁₋₁₀ alkyl group which may optionally be substituted with 1 or 2 OH groups;
with the proviso that the total number p of carbon atoms in R₁ and R₂ is in the range of 12 ≤ p ≤ 26;
or a mixture of such compounds in the clarification and/or deparaffination procedures in the processing of histological tissue samples.

2. The use according to claim 1 wherein
R₁ is a straight chain C₇₋₁₇, preferably C₉₋₁₃, alkyl group, a straight chain C₇₋₁₇, preferably C₉₋₁₀, alkenyl group, a straight chain C₇₋₁₈ alkadienyl group or a C₇₋₁₈ alkatrienyl group, where the alkyl, alkenyl, alkadienyl and alkatrienyl group may optionally be substituted with 1 or 2 OH groups.

3. The use according to claim 1 or 2 wherein R₂ is a C₁₋₆ alkyl group, preferably a C₁₋₄ alkyl group.

4. The use according to any of claims 1-3 wherein p is in the range 12≤p≤18.

5. The use according to any of claims 1-4 wherein both R₁ and R₂ are straight chain alkyl groups.

6. The use according to any of claims 1-5 wherein the compound of formula I is n-butyl decanoate, n-butyl dodecanoate.

7. A method for preparing histological tissue samples, said method comprising one or both of the following steps:
1) a clarification step in which a fixed and partially or fully dehydrated tissue sample is clarified through submersion into a composition A comprising 1-100 % w/w of at least one compound of the formula I defined in claim 1; and
2) a deparaffination step in which a thin section from a tissue sample cast in paraffin is deparaffinated through submersion into a composition B comprising 1-100 % w/w of at least one compound of the formula I defined in claim 1.

8. A method according to claim 7 wherein compositions A and B further comprise one or more diluents selected from
1) saturated hydrocarbon solvents such as odourless kerosene, n-paraffins (saturated n-alkanes), isoparaffins or naphthenes having a flash-point in the range 20-200 °C measured according to ASTM D92;
2) vegetable oils such as coconut oil, palm kernel oil, soy bean oil, rapeseed oil and the like, or processed vegetable oils such as vegetable oils subjected to hydrogenation, refining, bleaching, epoxydation or other conventional oleochemical processes;
3) esters based on C₁₋₂₄ monocarboxylic acids esterified with C₁₋₁₈ mono- or dialcohols not comprised by the general formula I, e.g. 2-ethylhexyl acetate, 2-ethylhexyl 2-ethylhexanoate, 2-ethylhexyl laurate, isobutyl laurate, 2-ethylhexyl oleate and the like;
4) esters based on C₂₋₁₀ dicarboxylic acids and C₁₋₁₈ alcohols, e.g. dimethyl oxalate, dimethyl succinate, dimethyl glutarate, dimethyl adipate; dibutyl phthalate and the like;
5) esters based on mono-, di- or tricarboxylic acids containing one or more hydroxy groups and on C₁₋₁₈ alcohols, e.g. trimethyl citrate, trimethyl acetyl citrate, ethyl lactate and the like;
6) terpenes derived from citrus fruits such as lemons, oranges and limes, an example of such a terpene being d-limonene.

## Patentansprüche

1. Verwendung einer Verbindung der allgemeinen Formel I
R₁-C(O)-O-R₂
in der
R₁ eine geradkettige C₃₋₂₃-Alkylgruppe, eine geradkettige C₃₋₂₃-Alkenylgruppe, eine geradkettige C₅₋₂₃-Alkadienylgruppe oder eine geradkettige C₇₋₂₃-Alkatrienylgruppe ist, wobei die Alkyl-, Alkenyl-, Alkadienyl- und Alkatrienylgruppe gegebenenfalls mit 1 oder 2 OH-Gruppen substituiert sein kann;
R₂ eine geradkettige C₁₋₁₀-Alkylgruppe ist, die gegebenenfalls mit 1 oder 2 OH-Gruppen substituiert sein kann;
mit der Maßgabe, daß die Gesamtzahl p der Kohlenstoffatome in R₁ und R₂ im Bereich von 12 ≤ p ≤ 26 liegt;
oder einer Mischung derartiger Verbindungen bei den Klärungs- und/oder Deparaffinierungsverfahren bei der Verarbeitung histologischer Gewebeproben.

2. Verwendung nach Anspruch 1, in der
R₁ eine geradkettige C₇₋₁₇-, bevorzugt C₉₋₁₃-Alkylgruppe, eine geradkettige C₇₋₁₇-, bevorzugt C₉₋₁₀-Alkenylgruppe, eine geradkettige C₇₋₁₈-Alkadienylgruppe oder eine C₇₋₁₈-Alkatrienylgruppe ist, wobei die Alkyl-, Alkenyl-, Alkadienyl- und Alkatrienylgruppe gegebenenfalls mit 1 oder 2 OH-Gruppen substituiert sein kann.

3. Verwendung nach Anspruch 1 oder 2, bei der R₂ eine C₁₋₆-Alkylgruppe, bevorzugt eine C₁₋₄-Alkylgruppe ist.

4. Verwendung nach irgendeinem der Ansprüche 1 - 3, bei der p im Bereich von 12 ≤ p ≤ 18 liegt.

5. Verwendung nach irgendeinem der Ansprüche 1 - 4, bei der sowohl R₁ als auch R₂ geradkettige Alkylgruppen sind.

6. Verwendung nach irgendeinem der Ansprüche 1 - 5, bei der die Verbindung der Formel I n-Butyldecanoat, n-Butyldodecanoat ist.

7. Verfahren zur Präparierung histologischer Gewebeproben, wobei das Verfahren einen oder beide der folgenden Schritte umfaßt:
1) einen Klärungsschritt, in dem eine fixierte und teilweise oder vollständig dehydratisierte Gewebeprobe durch Eintauchen in eine Zusammensetzung A, die 1 - 100% Gew./Gew. mindestens einer Verbindung der in Anspruch 1 definierten Formel I umfaßt, geklärt wird; und
2) einen Deparaffinierungsschritt, in dem ein dünner Schnitt aus einer Gewebeprobe, der in Paraffin gegossen ist, durch Eintauchen in eine Zusammensetzung B, die 1 - 100% Gew./Gew. mindestens einer Verbindung der in Anspruch 1 definierten Formel I umfaßt, deparaffiniert wird.

8. Verfahren nach Anspruch 7, in dem die Zusammensetzungen A und B weiter ein oder mehrere Verdünnungsmittel umfassen, die ausgewählt sind aus
1) gesättigten Kohlenwasserstoff-Lösungsmitteln, wie geruchlosem Kerosin, n-Paraffinen (gesättigten n-Alkanen), Isoparaffinen oder Naphthenen mit einer Entflammungstemperatur im Bereich von 20 - 200°C, gemessen gemäß ASTM D92;
2) Pflanzenölen wie Kokosnußöl, Palmkernöl, Sojabohnenöl, Rapsöl und dergleichen oder verarbeiteten Pflanzenölen wie Pflanzenölen, die einer Hydrierung, Raffination, Entfärbung, Epoxidierung oder anderen herkömmlichen ölchemischen Verfahren unterzogen worden sind;
3) Estern auf der Basis von C₁₋₂₄-Monocarbonsäuren, die mit C₁₋₁₈-Mono- oder -Dialkoholen verestert sind und nicht durch die allgemeine Formel I eingeschlossen sind, z.B. 2-Ethylhexylacetat, 2-Ethylhexyl-2-ethylhexanoat, 2-Ethylhexyllaurat, Isobutyllaurat, 2-Ethylhexyloleat und dergleichen;
4) Estern auf der Basis von C₂₋₁₀-Dicarbonsäuren und C₁₋₁₈-Alkoholen, z.B. Dimethyloxalat, Dimethylsuccinat, Dimethylglutarat, Dimethyladipat, Dibutylphthalat und dergleichen;
5) Estern auf der Basis von Mono-, Di- oder Tricarbonsäuren, die eine oder mehrere Hydroxygruppen enthalten, und von C₁₋₁₈-Alkoholen, z.B. Trimethylcitrat, Trimethylacetylcitrat, Ethyllactat und dergleichen;
6) Terpenen, die von Zitrusfrüchten wie Zitronen, Orangen und Limonellen abstammen, wobei ein Beispiel für ein derartiges Terpen d-Limonen ist.

## Revendications

1. Utilisation d'un composé de la formule générale I
R₁ - C(O) - O - R₂
où
R₁ est un groupe alkyle en C₃₋₂₃ à chaîne linéaire, un groupe alkényle en C₃₋₂₃ à chaîne linéaire, un groupe alcadiényle en C₅₋₂₃ à chaîne linéaire ou un groupe alcatriényle en C₇₋₂₃ à chaîne linéaire, où le groupe alkyle, alkényle, alcadiényle et alcatriényle peut optionnellement être substitué avec 1 ou 2 groupes OH;
R₂ est un groupe alkyle en C₁₋₁₀ à chaîne linéaire qui peut optionnellement être substitué avec 1 ou 2 groupes OH;
sous réserve que le nombre total p d'atomes de carbone dans R₁ et R₂ soit compris dans la gamme 12 ≤ p ≤ 26 ;
ou d'un mélange de tels composés dans les procédures de clarification et/ou de déparaffination dans le traitement de spécimens de tissus histologiques.

2. L'utilisation selon la revendication 1, où
R₁ est un groupe alkyle à chaîne linéaire en C₇₋₁₇, de préférence en C₉₋₁₃, un groupe alkényle à chaîne linéaire en C₇₋₁₇, de préférence en C₉₋₁₀, un groupe alcadiényle à chaîne linéaire en C₇₋₁₈, ou un groupe alcatriényle à chaîne linéaire en C₇₋₁₈, où le groupe alkyle, alkényle, alcadiényle et alcatriényle peut optionnellement être substitué avec 1 ou 2 groupes OH.

3. L'utilisation selon la revendication 1 ou 2, où R₂ est un groupe alkyle en C₁₋₆, de préférence un groupe alkyle en C₁₋₄.

4. L'utilisation selon l'une quelconque des revendications 1 à 3, où p est compris dans la gamme 12 ≤ p ≤ 18.

5. L'utilisation selon l'une quelconque des revendications 1 à 4, où à la fois R₁ et R₂ sont des groupes alkyle à chaîne linéaire.

6. L'utilisation selon l'une quelconque des revendications 1 à 5, dans laquelle le composé de formule I est du décanoate de n-butyle ou du dodécanoate de n-butyle.

7. Un procédé de préparation de spécimens de tissus histologiques, ledit procédé comprenant l'une ou les deux étapes suivantes :
1) une étape de clarification, dans laquelle un spécimen de tissu fixe et déshydraté pour tout ou partie est clarifié par submersion dans une composition A comprenant 1 à 100 % m/m d'au moins un composé de la formule I défini à la revendication 1; et
2) une étape de déparaffination, dans laquelle une mince section provenant d'un spécimen de tissu coulé dans de la paraffine est déparaffinée par submersion dans une composition B comprenant 1 à 100 % m/m d'au moins un composé de la formule I défini à la revendication 1.

8. Un procédé selon la revendication 7, dans lequel les compositions A et B comprennent en outre un ou plusieurs diluant(s) sélectionné(s) parmi
1) des solvants d'hydrocarbures saturés, tels que du kérosène inodore, des n-paraffines (n-alcanes saturés), des isoparaffines ou des naphtènes, dont le point d'éclair est compris dans la gamme allant de 20 à 200 ° C mesuré en accord avec ASTM D92 ;
2) des huiles végétales, telles que l'huile de noix de coco, l'huile de palmiste, l'huile de soja, l'huile de colza et équivalents, ou des huiles végétales traitées chimiquement, telles que des huiles végétales soumises à une hydrogénation, à un raffinage, à un blanchiment, à une époxydation ou à d'autres processus oléochimiques conventionnels ;
3) des esters à base d'acides monocarboxyliques en C₁₋₂₄ estérifiés avec des mono- ou des dialcools en C₁₋₁₈ non compris dans la formule générale I, par ex. l'acétate de 2-éthylhexyle, le 2-éthylhexyl 2-éthylhexanoate, le laurate de 2-éthylhexyle, le laurate d'isobutyle, l'oléate de 2-éthylhexyle et équivalents ;
4) des esters à base d'acides dicarboxyliques en C₂₋₁₀ et des alcools en C₁₋₁₈, par ex. l'oxalate de diméthyle, le succinate de diméthyle, le glutarate de diméthyle, l'adipate de diméthyle ; le phtalate de dibutyle et équivalents ;
5) des esters à base d'acides mono-, di- ou tricarboxyliques contenant un ou plusieurs groupe(s) hydroxy et à base d'alcools en C₁₋₁₈, par ex. le citrate de triméthyle, l'acétylcitrate de triméthyle, le lactate d'éthyle et équivalents ;
6) des terpènes dérivés d'agrumes, tels que citrons, oranges et citrons verts, le d-limonène constituant un exemple d'un tel terpène.
